# FASCICULE DE BREVET EUROPEEN

(11) **EP 2 528 771 B1**
(45) Date de publication et mention de la délivrance du brevet: **05.11.2014**
(21) Numéro de dépôt: 11702434.9
(22) Date de dépôt: 28.01.2011
(51) Int. Cl.: B60N 2/28

(54) **SIEGE AUTO POUR ENFANT, DESTINE A EQUIPER UN SIEGE DE VEHICULE**
KINDERAUTOSITZ ZUM EINSETZEN IN EINEN FAHRZEUGSITZ
CHILD CAR SEAT FOR FITTING A VEHICLE SEAT

(30) Priorité: 30.08.2010 FR 1056852; 28.01.2010 FR 1050606
(43) Date de publication de la demande: 05.12.2012
(73) Titulaire: Dorel France SA, 49309 Cholet Cedex (FR)
(72) Inventeur: BIAUD, Richard, F-69970 Chaponnay (FR); GUILGAULT, Nicolas, F-49450 Saint Macaire En Mauges (FR)
(74) Mandataire: Bioret, Ludovic
(86) Numéro de dépôt international: PCT/EP2011/051259
(87) Numéro de publication internationale: WO 2011/092310

(56) Documents cités:
- DE-A1- 4 344 812
- US-A1- 2002 145 318

## Description

### 1. Domaine de l'invention

Le domaine de l'invention est celui de la puériculture. Plus précisément, l'invention concerne les sièges auto pour enfant qui sont destinés à être installés sur les sièges passagers des véhicules. Elle concerne en particulier les sièges auto pour enfant adaptés à recevoir des enfants de tailles et/ou de poids variables, et susceptibles d'évoluer pour prendre en compte l'évolution d'un enfant sur plusieurs années. Ainsi, l'invention s'applique aux sièges auto évolutifs.

Plus particulièrement encore, l'invention s'applique aux sièges auto prévoyant deux types de retenue de l'enfant, dits « groupes 1/2/3 », et permettant ainsi l'évolution du siège auto de la catégorie groupe 1, pour des enfants dont le poids est compris entre 9 et 18 kg, à la catégorie groupe 2/3 pour des enfants dont le poids est compris entre 15 et 36 kg.

### 2. Solutions de l'art antérieur

Les sièges auto groupe 1/2/3 adaptés à la fois à des petits et à des grands enfants, c'est-à-dire évolutifs, sont connus. Ces sièges auto doivent être adaptés à différents types de retenue. Le premier type de retenue est un harnais à bretelles solidaire du siège auto pour les plus petits enfants (groupe 1). Dans ce cas, la ceinture du véhicule peut être utilisée pour maintenir le siège auto sur le siège du véhicule, à moins que celui-ci soit maintenu par des moyens dédiés, tels que des pinces Isofix®.

Le second type de retenue, environ à partir de l'âge de 3 ans, plus précisément à partir d'un poids de l'enfant supérieur ou égal à 15kg, est la ceinture trois points du véhicule pour maintenir l'enfant (groupe 2/3).

Il est parfois difficile de ne pas se tromper, ou à tout le moins de ne pas hésiter, dans la fixation du siège auto au véhicule, car il existe de multiples points de passage de ceinture du véhicule à utiliser ou à ne pas utiliser suivant l'usage en groupe 1 ou en groupe 2/3 du siège auto.

Notamment, il ne faut pas utiliser cette ceinture pour maintenir l'enfant en groupe 1, que ce soit pour remplacer le harnais ou en complément de celui-ci. Inversement, en groupe 2/3, il faut que l'enfant soit maintenu par cette ceinture de sécurité, et non par le harnais.

Pour tenter de limiter ce risque, on a prévu des indicateurs réglementaires, placés aux endroits adéquats pour chacun des deux groupes. Cependant, il s'agit d'un système d'aide, ou d'assistance, uniquement informatif, qui ne permet pas d'empêcher une erreur d'utilisation (« misuse » en anglais).

### 3. Objectifs de l'invention

L'invention a donc notamment pour objectif de pallier tout ou partie de ces inconvénients de l'art antérieur.

Plus précisément, l'invention a pour objectif de faciliter et sécuriser l'utilisation d'un tel siège auto du groupe 1/2/3.

Il existe encore un besoin pour éviter que l'utilisateur ne se trompe dans le mode de retenue de l'enfant en fonction de son âge et de sa morphologie.

L'invention vise notamment à répondre à tout ou partie de ces besoins.

### 4. Exposé de l'invention

L'invention y parvient grâce à un siège auto pour enfant, destiné à être solidarisé au siège d'un véhicule automobile, du type dit groupe 1/2/3, comprenant une assise et un dossier, ledit siège auto proposant deux chemins distincts de guidage d'une ceinture de sécurité dudit véhicule destinée à maintenir ledit siège et/ou ledit enfant, respectivement selon que ledit siège est utilisé dans une position dite groupe 1 ou dans une position dite groupe 2/3.

Selon l'invention, le siège auto comprend des moyens de détermination de la position, groupe 1 ou groupe 2/3, dans laquelle se trouve ledit siège, et au moins un indicateur de passage d'une sangle de ladite ceinture de sécurité du véhicule pouvant prendre deux états différents, un état actif et un état inactif, en fonction d'une information ou d'une action délivrée par lesdits moyens de détermination de la position.

Le siège auto comprend également des moyens de détermination de la position, groupe 1 ou groupe 2/3, dans laquelle se trouve ledit siège, et au moins un indicateur de passage d'une sangle de ladite ceinture de sécurité du véhicule pouvant prendre deux états différents, un état actif et un état inactif, en fonction d'une information et/ou d'une action délivrée par lesdits moyens de détermination de la position.

Au moins un des indicateurs de passage peut comprendre au moins une pièce mobile, obturant ou empêchant l'accès à un passage de sangle défini sur le siège, dans l'état inactif, et autorisant l'accès au passage de sangle dans l'état actif.

Au moins un des indicateurs de passage peut comprendre au moins un élément indicateur lumineux et/ou présentant une première information visible dans l'état actif.

Lesdits moyens de détermination peuvent par ailleurs tenir compte de la position d'une têtière mobile par rapport audit dossier.

Notamment, le siège auto peut comprendre des moyens de contrôle et/ou d'actionnement d'au moins un desdits indicateurs de passage de sangle pilotés par ladite têtière.

La têtière peut être mobile par rapport au dossier d'une part entre une position de hauteur minimale et une position intermédiaire et d'autre part entre la position intermédiaire et une position de hauteur maximale. Dans ce cas, les moyens de contrôle et/ou d'actionnement peuvent être configurés pour commander la valeur prise par au moins un des indicateurs de passage de sangle selon que la position de la têtière est comprise entre la position de hauteur minimale et la position intermédiaire ou entre la position intermédiaire et la position de hauteur maximale.

Par ailleurs, dans un mode de réalisation, le siège auto comprend un harnais dont les bretelles peuvent être configurées pour pouvoir être escamotées lors du passage de l'utilisation en groupe 1 à l'utilisation en groupe 2/3.

Dans ce cas, les moyens d'actionnement peuvent par exemple comprendre une ou plusieurs poignées d'actionnement permettant également un escamotage des bretelles.

Ainsi, lorsque les bretelles sont escamotées par un utilisateur, on passe d'une utilisation du siège auto en groupe 1 à une utilisation du siège auto en groupe 2/3, ce qui induit un changement un changement de moyen de retenue et/ou du chemin de guidage de la ceinture de sécurité du véhicule. Dans le cas où les moyens d'actionnement comprennent une ou plusieurs poignées d'actionnement permettant un escamotage des bretelles, une action simultanée peut être induite consistant à modifier la valeur prise par au moins l'un des indicateurs de passage de sangle. Cela permet de guider l'utilisateur dans l'utilisation du siège auto.

A l'inverse, lorsque les bretelles escamotées sont remises en place, on passe d'une utilisation du siège auto en groupe 2/3 à une utilisation du siège auto en groupe 1, ce qui induit l'utilisation du harnais du siège auto à la place de la sangle de ceinture de sécurité du véhicule pour le maintien de l'enfant. Cette ceinture de sécurité assure alors uniquement la solidarisation du siège auto au véhicule.

La sangle de ceinture de sécurité du véhicule présente généralement, lorsqu'elle est mise en place pour maintenir l'enfant dans le véhicule, une sangle ventrale et une sangle pectorale.

Le siège auto peut comprendre :
- au moins un premier passage de sangle solidaire du dossier et destiné à recevoir la sangle pectorale de la ceinture de sécurité, lorsque le siège auto est utilisé en groupe 1,
- au moins un second passage de sangle solidaire de la têtière et destiné à recevoir la sangle pectorale de la ceinture de sécurité, lorsque le siège auto est utilisé en groupe 2/3,
- au moins un premier indicateur associé à chacun des premiers passages configuré pour prendre une valeur active lorsque le siège auto est utilisé en groupe 1 et une valeur inactive lorsque le siège auto est utilisé en groupe 2/3,
- au moins un second indicateur associé à chacun des seconds passages configuré pour prendre une valeur active lorsque le siège auto est utilisé en groupe 2/3, et une valeur inactive lorsque le siège auto est utilisé en groupe 1.

La présence du premier indicateur peut permettre de guider l'utilisateur dans la fixation du siège auto au siège du véhicule pour l'utilisation du siège auto en groupe 1.

La présence du second indicateur peut permettre de guider l'utilisateur dans le mode de retenue de l'enfant dans le siège auto pour l'utilisation du siège auto en groupe 2/3.

L'état actif ou valeur active du premier et/ou deuxième indicateur peut consister par exemple en une couleur attirant le regard, par exemple la couleur rouge.

L'état inactif ou valeur inactive du premier et/ou deuxième indicateur peut consister par exemple en une couleur n'attirant pas le regard, par exemple une couleur neutre, grise, noire ou blanche notamment, ou en l'absence de couleur.

La têtière peut être mobile par rapport au dossier d'une part entre une position de hauteur minimale et une position intermédiaire et d'autre part entre la position intermédiaire et une position de hauteur maximale. Dans ce cas, les moyens d'actionnement de la têtière peuvent être configurés pour commander la valeur prise par le ou les indicateurs de passage de sangle selon que la position de la têtière est comprise entre la position de hauteur minimale et la position intermédiaire ou entre la position intermédiaire et la position de hauteur maximale.

Dans ce cas également, le siège auto peut être tel que :
- le premier passage de sangle solidaire du dossier est destiné à recevoir la sangle pectorale de la ceinture de sécurité lorsque la position de la têtière est comprise entre la position de hauteur minimale et la position intermédiaire,
- le second passage de sangle solidaire de la têtière est destiné à recevoir la sangle pectorale de la ceinture de sécurité lorsque la position de la têtière est comprise entre la position intermédiaire et la position de hauteur maximale,
- le premier indicateur associé à chacun des premiers passages est configuré pour prendre une valeur active lorsque la position de la têtière est comprise entre la position de hauteur minimale et la position intermédiaire, et une valeur inactive lorsque la position de la têtière est comprise entre la position intermédiaire et la position de hauteur maximale, et
- le second indicateur associé à chacun des seconds passages est configuré pour prendre une valeur active lorsque la position de la têtière est comprise entre la position intermédiaire et la position de hauteur maximale et une valeur inactive lorsque la position de la têtière est comprise entre la position de hauteur minimale et la position intermédiaire.

Lorsque le siège auto est utilisé en groupe 1, il peut comprendre une embase sur laquelle peut être montée l'assise. Dans ce cas, lesdits moyens de détermination tiennent compte de la présence ou de l'absence de ladite embase.

Notamment, le siège auto peut comprendre des moyens de contrôle et/ou d'actionnement du ou des indicateurs de passage de sangle en fonction de la présence ou de l'absence d'une embase sur laquelle l'assise peut être montée. L'embase peut comprendre au moins un élément contrôlant le passage dans l'état inactif d'un indicateur associé à un passage de sangle ventrale de la ceinture de sécurité.

Dans le cas où le siège auto comprend une embase, le siège auto, notamment l'assise, peut comprendre au moins un troisième indicateur de passage de la sangle ventrale, pouvant prendre deux valeurs, à savoir une valeur inactive ou active en fonction respectivement de la présence ou de l'absence de l'embase. L'embase peut alors comporter des moyens d'actionnement du troisième indicateur de passage de sangle.

Les états ou valeurs actif ou inactif du troisième indicateur peuvent être tels qu'indiqué plus haut en référence aux premier et deuxième indicateurs.

La présence du troisième indicateur peut guider l'utilisateur dans le mode de retenue de l'enfant lorsque le siège auto est utilisé en groupe 2/3.

L'embase peut comprendre des moyens de guidage d'une sangle ventrale d'une ceinture de sécurité du véhicule lorsque le siège est utilisé en groupe 1.

Un mode de réalisation peut consister à prévoir une liaison permanente entre l'assise et/ou le dossier et l'embase, l'embase étant sous l'assise. Un troisième et un quatrième passages de sangles et indicateurs peuvent être prévus dans ce cas.

L'embase peut comporter des moyens d'escamotage de la patte d'entrejambe agencés pour escamoter la patte d'entrejambe lorsque le siège auto est utilisé en groupe 2/3 et pour faire apparaître la patte d'entrejambe lorsque le siège auto est utilisé en groupe 1.

Dans ce cas, l'assise peut comporter un logement de la patte d'entrejambe apte à recevoir la patte d'entrejambe lorsque le siège est utilisé en groupe 2/3. Dans ce cas également, les moyens d'escamotage peuvent être contrôlés par l'embase.

### 5. Liste des figures

D'autres caractéristiques et avantages de l'invention apparaîtront plus clairement à la lecture de la description suivante d'un mode de réalisation de l'invention, donné à titre d'exemple illustratif et non limitatif, et des dessins annexés dans lequel :
- la figure 1 représente de façon schématique en perspective un siège auto conforme à l'invention utilisé en groupe 1, le siège auto étant représenté occupé par un enfant et fixé à un siège d'un véhicule,
- la figure 2 illustre de manière schématique le siège auto de la figure 1 utilisé en groupe 2/3, occupé par un enfant, l'enfant étant attaché à l'aide de la ceinture du véhicule,
- la figure 3 représente, de manière schématique en perspective, le siège auto de la figure 1, sans enfant et non attaché au siège du véhicule,
- la figure 4 représente le siège auto de la figure 2, sans enfant et non attaché au véhicule,
- la figure 5 est une vue de derrière schématique et en perspective du siège auto de la figure 3,
- la figure 6 représente, de manière schématique en perspective, le siège auto de la figure 4 vu de derrière ainsi que l'embase qui a été détachée de ce siège auto pour le faire passer du groupe 1 au groupe 2/3,
- la figure 7 représente, de manière schématique et partielle, en perspective, le dossier et la têtière du siège auto de la figure 1 vus de devant,
- la figure 8 représente, en vue de derrière, schématique et partielle, en perspective, le dossier d'un siège auto conforme à l'invention,
- la figure 9 représente en perspective, de manière schématique et partielle, vu de derrière, le dossier du siège auto conforme à l'invention utilisé en groupe 2/3,
- la figure 10 est une vue similaire à celle de la figure 9, le siège auto étant utilisé en groupe 1,
- la figure 11 représente en perspective, de manière schématique et partielle, l'assise d'un siège auto conforme à l'invention utilisé en groupe 1, l'assise étant dépourvue de garniture,
- la figure 12 est une vue similaire à celle de la figure 11, le siège auto étant utilisé en groupe 2/3,
- la figure 13 représente, de manière schématique, un autre exemple de siège auto conforme à l'invention utilisé en groupe 1,
- la figure 14 est une vue schématique en perspective du siège auto de la figure 13 utilisé en groupe 2/3, et
- la figure 15 illustre le siège auto de la figure 13, de manière schématique et partielle, en vue de côté, lorsqu'il est dans une position inclinée.

### 6. Description détaillée d'un mode de réalisation de l'invention

### 6.1 principe de l'invention

L'invention propose donc une solution simple et efficace, pour éviter les risques d'erreurs et de mauvaises installations d'une ceinture de sécurité lors de l'installation d'un siège auto pour enfant dans un véhicule automobile, selon que celui-ci est utilisé en groupe 1 ou en groupe 2/3.

Pour cela, un siège de l'invention met en oeuvre des indicateurs, indiquant les passages de sangle à utiliser, et/ou des détrompeurs, interdisant l'utilisation des passages de sangle qui ne doivent pas être utilisés. Ces indicateurs et/ou ces détrompeurs sont contrôlés, ou pilotés, par des moyens de détermination de la position du siège auto, selon qu'il est en groupe 1 ou en groupe 2/3.

Selon les modes de réalisation, cette détermination peut être effectuée, par exemple, par la présence (groupe 1) ou l'absence (groupe 2/3) d'une embase amovible, la détection de la hauteur de la têtière (basse en groupe 1, haute en groupe 2/3), la présence (groupe 1) ou l'absence (groupe 2/3) du harnais, ...

En fonction des modes de réalisation, les moyens de détermination peuvent piloter l'allumage de diodes désignant les passages de sangle à utiliser, ou déplacer, par exemple à l'aide de tringles, de biellettes et/ou de câbles des pièces mobiles, jouant le rôle d'indicateur (faisant apparaître par exemple une couleur verte ou une couleur rouge) selon la position, et/ou formant détrompeur, par exemple en obturant un passage de sangle qui ne doit pas être utilisé.

### 6.2 mode de réalisation particulier

### 6.2.1 incorporation par référence

L'invention propose donc un siège auto réglable, destiné à être utilisé selon les cas avec un harnais intégré (groupe 1 par exemple) ou avec la ceinture de sécurité du véhicule (groupe 2/3 par exemple) pour le maintien de l'enfant.

Selon l'invention, des moyens de gestion d'indicateurs de passage de sangles de la ceinture de sécurité du véhicule sont prévus, de façon à modifier ces indicateurs en fonction de l'utilisation requise (groupe 1 ou groupe 2/3 par exemple), de façon que la mise en oeuvre de cette ceinture de sécurité pour le maintien du siège auto et/ou de l'enfant soit adaptée, selon les situations.

### 6.2.2 description du siège

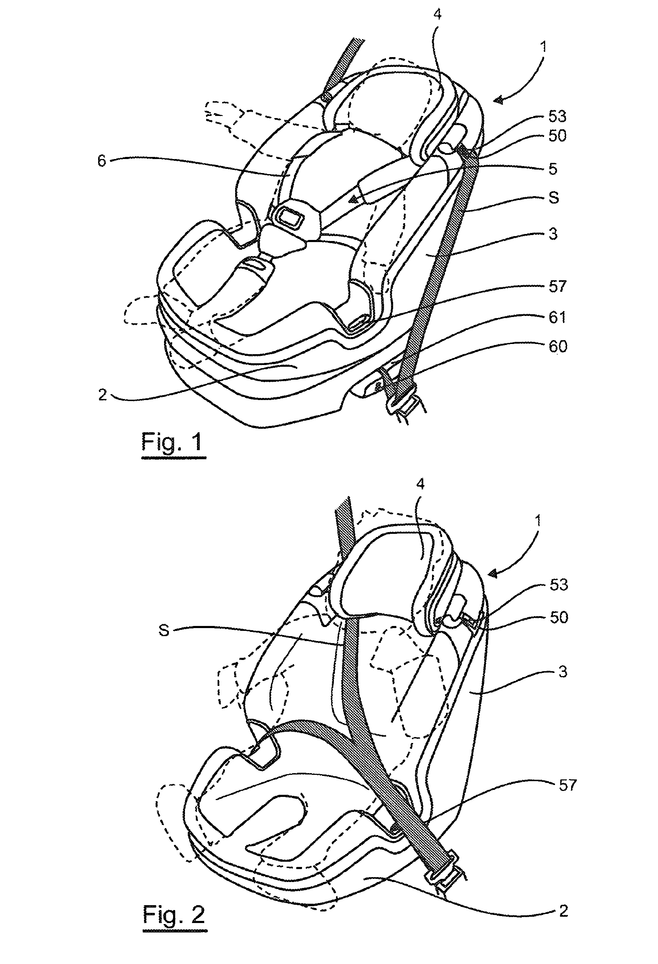

On a représenté, sur les figures 1 à 6, un siège auto 1 pour enfant conforme à l'invention, destiné à être solidarisé à un siège d'un véhicule automobile. Le siège auto 1 comprend une assise 2, un dossier 3, une têtière 4, qui est, dans ce mode de réalisation, mobile par rapport au dossier 3, et un harnais 5 comprenant deux bretelles 6 et une patte d'entrejambe 7.

Le siège auto est conçu pour être mis en oeuvre avec deux moyens de retenue distincts, selon la taille et/ou le poids de l'enfant :
- le harnais 5, dans une position dite groupe 1 ;
- une ceinture de sécurité du véhicule, dans une position dite groupe 2/3.

Dans cet exemple illustré, la têtière 4 est mobile par rapport au dossier 3 entre une position de hauteur minimale et une position de hauteur maximale, en passant par une position intermédiaire, qui peut notamment correspondre à la position transitoire entre le groupe 1 et le groupe 2/3. La têtière 4 peut prendre par exemple une pluralité de positions entre les positions de hauteurs extrémales, définies par exemple par une crémaillère.

Dans le mode de réalisation illustré, les bretelles 6 sont fixées chacune en deux points du siège auto 1, soient quatre points de fixation, et la patte d'entrejambe 7 est fixée en un point du siège auto, de telle sorte que le harnais est du type harnais à cinq points. Les bretelles 6 comprennent chacune une portion destinée à maintenir le torse de l'enfant et une portion formant une portion de ceinture ventrale. Les bretelles 6 et la patte d'entrejambe 7 sont réunies lors de la retenue d'un enfant dans une boucle 9 de harnais comportant un bouton 10 de commande de l'ouverture du harnais 5.

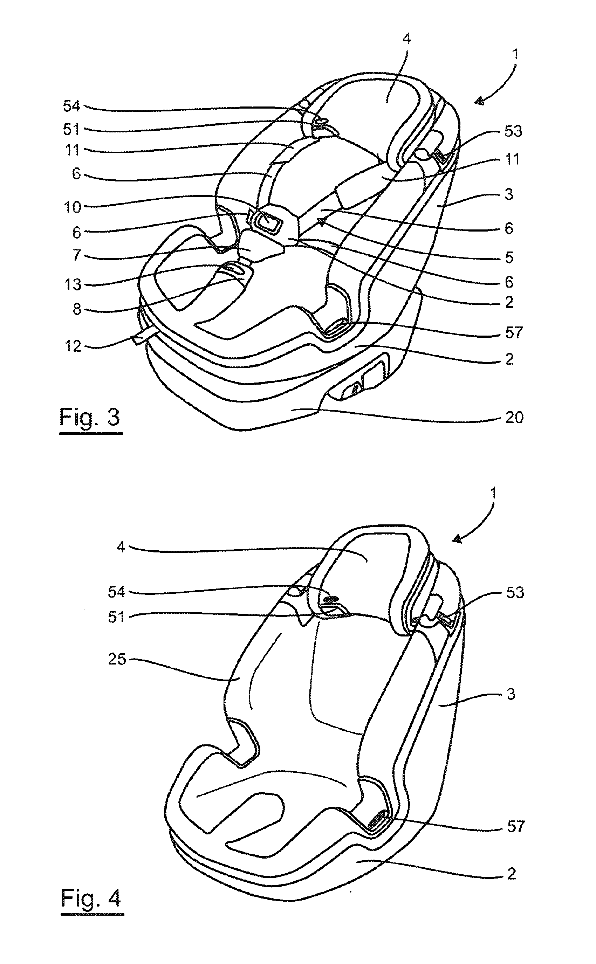

Les bretelles 6, comprennent, dans l'exemple illustré, deux fourreaux 11 formant des manchons autour des bretelles 6 et comportant un tissu présentant un fort coefficient de frottement permettant de retenir l'enfant en cas de choc. Une portion d'extrémité 12 du harnais 5, visible sur la figure 3, permet à un utilisateur de régler la longueur des bretelles 6 du harnais 5. Pour réduire la longueur des bretelles 6, on tire par exemple sur la portion d'extrémité 12 du harnais et pour relâcher et augmenter la longueur des bretelles, on appuie par exemple sur un bouton 13 situé sur la base 8 de la patte d'entrejambe 7.

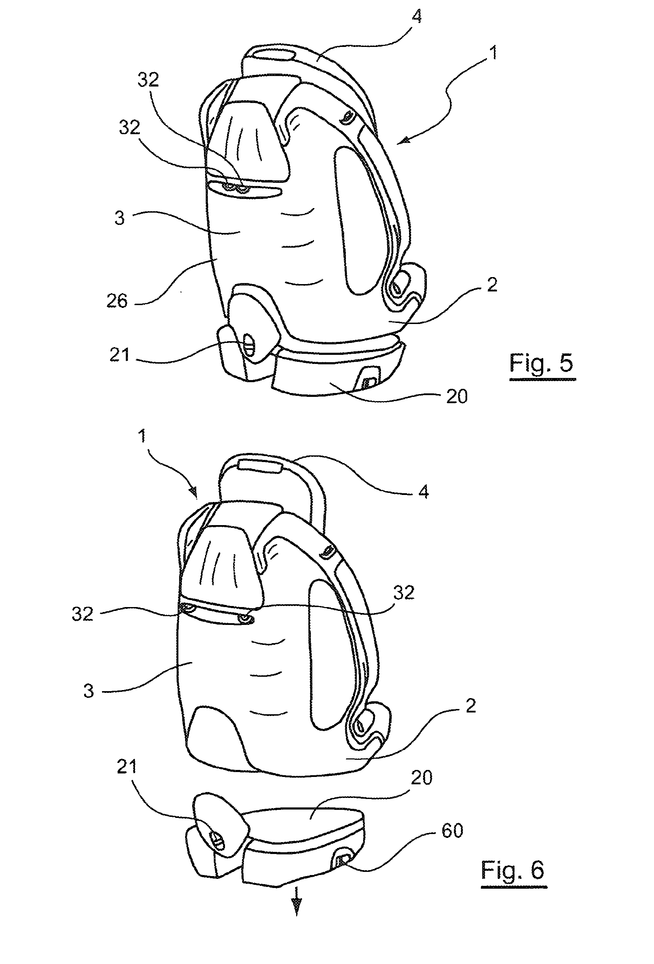

Dans l'exemple illustré, le siège auto 1 comporte, ou coopère avec, une embase 20 sur laquelle l'assise 2 est montée, notamment lorsque le siège auto est utilisé en groupe 1. Lorsque le siège auto est utilisé en groupe 2/3 comme illustré sur la figure 2 ou la figure 4 par exemple, l'embase 20 est désolidarisée de l'assise 2, comme illustré sur la figure 6, à l'aide par exemple d'un bouton de désengagement 21 visible sur les figures 5 et 6.

La présence de l'embase 20 peut permettre par exemple la surélévation du siège auto 1 lorsqu'il est utilisé en groupe 1 et/ou l'inclinaison de l'assise 2 et du dossier 3 relativement à l'embase 20 et/ou la rotation de l'assise 2 relativement à l'embase 20.

Sur les figures 1 à 6, on peut voir que le siège auto est recouvert d'une garniture 25 en tissu sur l'avant du siège auto et d'une coque 26 par exemple en plastique visible sur les figures 5 et 6 et recouvrant essentiellement le dossier, à l'arrière du siège auto.

### 6.2.3 harnais amovible

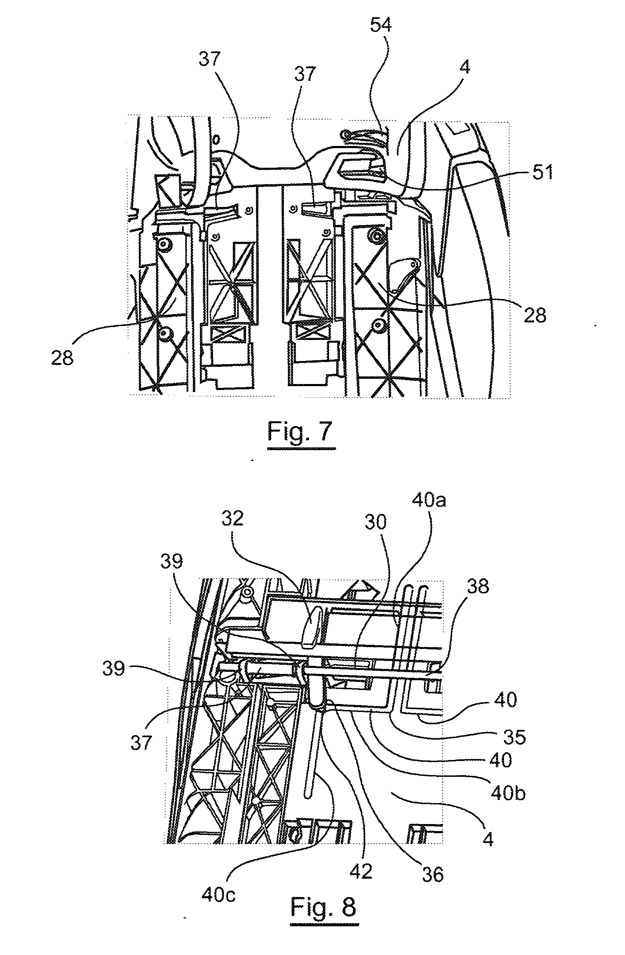

Le siège auto 1 comprend, dans le mode de réalisation illustré, des moyens d'escamotage 30 des bretelles, non visibles sur les figures 1 à 6 mais visibles sur les figures 8 à 10 et décrits ci-après. Les moyens d'escamotage 30 des bretelles 6 du harnais 5 sont agencés de manière à ce que les bretelles 6 puissent prendre deux états :
- un état accessible lorsque la têtière 4 se trouve entre une position de hauteur minimale et une position intermédiaire ;
- un état escamoté, dans lequel les bretelles 6 sont rangées dans au moins un logement 28, deux dans l'exemple illustré visibles sur la figure 7, prévu à cet effet dans le dossier, lorsque la têtière 4 se trouve entre la position intermédiaire et une position de hauteur maximale.

Les logements 28 des bretelles 6 sont formés en creux dans le dossier 3.

Pour les utilisations du siège auto 1 en groupe 1, le harnais 5 est utilisé, les bretelles 6 étant alors dans un état accessible comme illustré sur les figures 1 et 3. Pour l'utilisation du siège auto 1 en groupe 2/3, les bretelles 6 sont dans l'état escamoté, comme illustré sur les figures 2 et 4.

La garniture de la têtière 4 et de l'assise 2 permet notamment de dissimuler les bretelles 6 et plus généralement le harnais 5, même si celui-ci est toujours présent dans le siège auto illustré sur les figures 2 et 4.

Il est à noter que, dans ce mode de réalisation, le harnais n'est jamais désolidarisé du siège, mais seulement rendu inactif, dans son état escamoté. Ainsi, il n'y a pas de risque de perte du harnais, ni d'utilisation sans harnais en groupe 1.

Pour faire passer les bretelles 6 d'un état accessible à un état escamoté et réciproquement, l'utilisateur peut actionner au moins une poignée d'actionnement 32, au nombre de deux dans l'exemple illustré. De telles poignées d'actionnement peuvent présenter différentes formes, par exemple une forme de rond évidé comme illustré sur les figures 5 et 6 ou une forme de manette comme illustré sur les figures 8 à 10, ces formes de poignées d'actionnement 32 n'étant pas limitatives.

Sur la figure 5, les poignées d'actionnement 32 sont représentées rapprochées, et les bretelles 6 sont alors dans l'état accessible. Sur la figure 6, les poignées d'actionnement 32 sont représentées écartées, et les bretelles 6 sont alors dans l'état escamoté.

Le siège auto 1 illustré sur les figures 1 à 6 comprend des premiers moyens de butée 35 empêchant le passage pour la têtière 4 de la position intermédiaire à une position supérieure tant que les bretelles 6 ne sont pas dans l'état escamoté.

Le siège auto illustré sur les figures 1 à 6 comporte également des seconds moyens de butée 36 empêchant le passage pour la têtière 4 de la position intermédiaire à une position inférieure tant que les bretelles 6 ne sont pas dans l'état accessible.

Les premiers et seconds moyens de butée 35 et 36 sont visibles sur les figures 8 à 10 par exemple. Sur ces figures, on peut voir que la têtière 4 comporte deux rainures 40 en forme de marche comprenant une portion haute 40a, verticale et disposée de façon centrale, une portion basse 40c, verticale et disposée latéralement, les portions haute 40a et basse 40c étant reliées entre elles par une portion intermédiaire 40b horizontale.

Le déplacement des poignées d'actionnement 32 de l'intérieur vers l'extérieur du siège auto ou de l'extérieur vers l'intérieur du siège auto entraîne le déplacement de manchons 37 aptes à coulisser le long d'une tige 38 horizontale. Les bretelles 6, notamment une portion d'extrémité de celles-ci, sont solidaires chacune d'un manchon 37. La portion d'extrémité de chaque bretelle 6 peut former une boucle autour du manchon 37, par exemple, de manière non visible sur les figures, les figures 7 à 10 étant représentées dépourvues de bretelles 6, dans un souci de clarté du dessin. Les poignées d'actionnement 32 sont solidaires d'une pièce d'entraînement 39 apte à coulisser sur la tige 38 et entourant le manchon 37, de manière à l'entraîner en coulissement le long de la tige 38 dans un sens comme dans l'autre en fonction du déplacement de la poignée d'actionnement 32 correspondante.

Un doigt 42 est agencé pour coulisser dans la rainure 40. Ce doigt 42 est solidaire de la poignée d'actionnement 32. Ainsi, lorsque l'on déplace la poignée d'actionnement 32, on déplace également le doigt 42 le long de la portion 40b de la rainure. Ce déplacement n'est possible que lorsque la têtière 4 est dans la position intermédiaire illustrée sur les figures 8 à 10.

Lorsque la têtière 4 est dans la position de hauteur minimale (non représentée sur les figures), le doigt 42 se trouve à l'extrémité supérieure de la rainure 40a, les poignées 32 étant alors dans l'état rapproché correspondant à l'état accessible des bretelles 6.

En montant la têtière, le doigt 42 coulisse le long de la rainure 40 dans sa portion haute 40a, jusqu'à buter sur les premiers moyens de butée 35 lorsque la têtière 4 a atteint la position intermédiaire correspondant à l'arrivée du doigt 42 dans la portion intermédiaire 40b de rainure. Les premiers moyens de butée 35 sont constitués dans cet exemple par un bord de la rainure 40 correspondant à l'extrémité inférieure de la portion haute 40a de la rainure.

Il faut alors actionner les poignées 32 d'actionnement en les écartant l'une de l'autre, et, par ce geste, faire passer les bretelles 6 de l'état accessible à l'état escamoté.

Pendant ce mouvement des poignées d'actionnement 32, le doigt 42 est déplacé dans la rainure 40 dans sa portion intermédiaire 40b, horizontalement, de l'intérieur vers l'extérieur du siège auto.

Lorsque les poignées d'actionnement 32 sont en position écartée correspondant à l'état escamoté des bretelles, le doigt 42 est arrivé à l'extrémité latérale de la portion intermédiaire 40b de la rainure. Il est alors possible de faire monter à nouveau la têtière 4, de la position intermédiaire jusqu'à une position de hauteur maximale. Pendant ce déplacement de la têtière 4, le doigt 42 est déplacé le long de la portion basse 40c de la rainure, jusqu'à l'extrémité inférieure de celle-ci, lorsque la têtière a atteint une position de hauteur maximale.

Lorsque la têtière 4 est dans la position de hauteur maximale, le doigt 42 est dans l'extrémité inférieure de la rainure 40, dans sa portion basse 40c.

Si l'on déplace la têtière 4 depuis la position de hauteur maximale pour la descendre, le doigt 42 coulisse dans la portion de rainure 40c jusqu'à buter contre les deuxièmes moyens de butée 36, qui forme l'extrémité supérieure de la portion basse 40c de la rainure, lorsque la têtière 4 a atteint la position intermédiaire. Il n'est plus possible de faire descendre la têtière, tant que l'on n'a pas actionné les poignées d'actionnement 32 de manière à faire passer les bretelles 6 de l'état escamoté à l'état accessible, en déplaçant les manchons 37 solidaires des bretelles 6.

Une fois que les bretelles 6 sont dans l'état accessible, on peut descendre encore la têtière 4, de la position intermédiaire vers la position de hauteur minimale, le doigt 42 coulissant alors dans la portion haute 40a de la rainure 40.

Il est à noter que, dans le mouvement de coulissement entre le doigt 42 et la rainure 40, ce n'est pas le doigt 42 qui se déplace, mais la rainure 40 solidaire de la têtière 4.

Bien sûr, d'autres moyens mécaniques, pour la commande manuelle ou le cas échéant motorisée, du déplacement du harnais de l'état escamoté vers l'état accessible, et réciproquement, sont envisageables, sous la forme de câbles, de tringles de bielles, de guides,..., dès lors que ces moyens mécaniques sont actionnés par des systèmes d'actionnement (boutons mobiles en coulissement et/ou en rotation, moteur,...) qui ne peuvent être actionnés que dans la position intermédiaire.

Bien que, dans certains modes de réalisation, on puisse prévoir que la position intermédiaire correspond à une zone intermédiaire (c'est-à-dire à plusieurs positions intermédiaires dans lesquels l'actionnement serait possible), cette position intermédiaire peut être unique.

En outre, au vu notamment des réglementations en vigueur, la position intermédiaire est adaptée pour permettre que, dans cette position particulière et uniquement dans celle-ci, les deux états (accessible et escamoté) soient disponibles, et donc les deux utilisations (groupe 1 et groupe 2/3) soient possibles.

### 6.2.4 contrôle des passages de sangle

Le siège auto comporte différents passages de sangle de la ceinture de sécurité du siège, visibles notamment sur les figures 1 et 2, prévus pour guider les sangles sur le siège auto de façon à le maintenir de façon efficace. Ce maintien diffère selon les utilisations. Pour l'utilisation en groupe 1, le siège auto 1 est fixé au siège du véhicule à l'aide de la ceinture de sécurité du véhicule et l'enfant est attaché à l'aide du harnais 5 du siège auto. Pour l'utilisation en groupe 2/3, l'enfant est maintenu à l'aide de la ceinture de sécurité du véhicule.

Le siège auto comprend donc, comme illustré sur les figures 1, 2 et 9, 10, au moins un premier passage 50 de sangle solidaire du dossier 3 et destiné à recevoir la sangle S pectorale de la ceinture de sécurité dans l'état accessible des bretelles. Ce premier passage 50 présente, dans le mode de réalisation illustré, sensiblement une forme de L, comme visible notamment sur la figure 2. La branche sensiblement verticale du L est une zone d'introduction de la sangle, celle-ci devant être placée, en fonctionnement normal, sur la seconde branche, sensiblement horizontale. Un capot, mobile par exemple autour d'un axe de rotation, peut être prévu pour fermer ou permettre l'accès à ce passage 50.

Le siège auto 1 comprend également au moins un second passage 51 de sangle solidaire de la têtière 4, visible sur la figure 7 en particulier, et destiné à recevoir la sangle S pectorale de la ceinture de sécurité dans l'état escamoté des bretelles.

Le siège auto 1 comporte par exemple au moins un indicateur de passage d'une sangle d'une ceinture de sécurité du véhicule, pouvant prendre deux états, encore appelés valeurs, différents en fonction de l'utilisation en groupe 1 ou en groupe 2/3. Dans l'exemple illustré, l'indicateur de passage peut prendre deux valeurs différentes en fonction de l'état accessible ou escamoté des bretelles (qui correspond respectivement à une utilisation en groupe 1 ou en groupe 2/3 du siège auto, dans cet exemple).

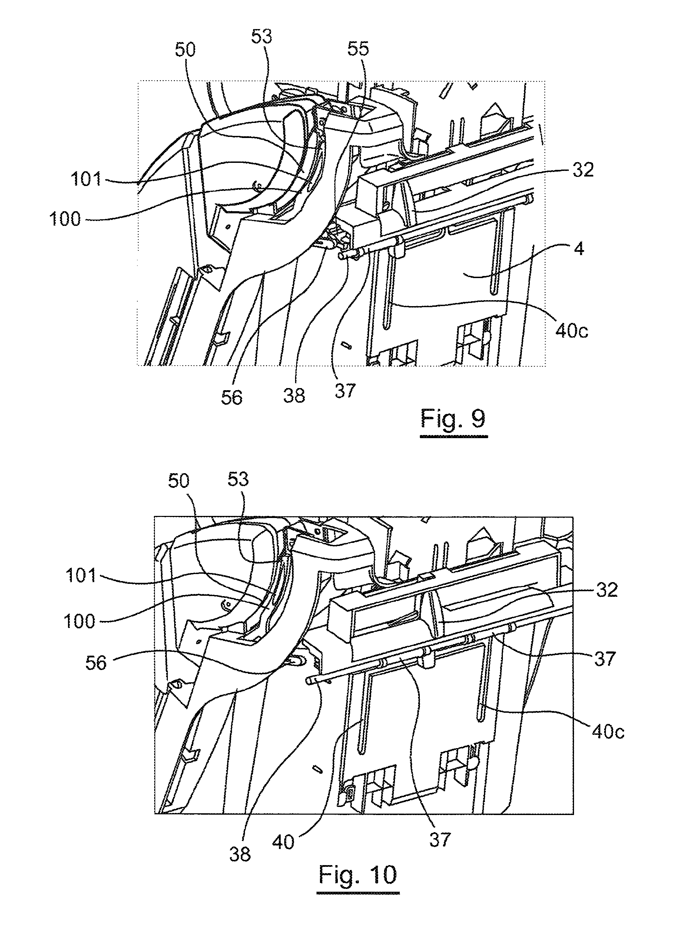

Dans l'exemple illustré, le siège auto comporte un premier indicateur 53, visible notamment sur les figures 9 et 10, associé à chacun des premiers passages 50 et configuré pour prendre une valeur active dans l'état accessible et une valeur inactive dans l'état escamoté. Le siège auto comporte dans l'exemple également un second indicateur 54, visible notamment sur les figures 7 et 8, associé à chacun des seconds passages 51 et configuré pour prendre une valeur active dans l'état escamoté et une valeur inactive dans l'état accessible.

L'indicateur 53 de passage comprend une pièce mobile 100, obturant ou empêchant l'accès à un passage de sangle défini sur le siège, dans l'état inactif, et autorisant l'accès au passage de sangle dans l'état actif, comme visible sur les figures 9 et 10.

L'indicateur 53 de passage comprend également au moins un élément indicateur 101 présentant une première information visible dans l'état actif. Dans l'exemple illustré, l'élément indicateur 101 est un élément de couleur rouge, et la valeur inactive est l'absence de la couleur rouge due à la mobilité de la pièce mobile 100 qui escamote l'élément indicateur en état inactif.

Dans l'exemple illustré sur la figure 1, l'indicateur 53 a une valeur active (par exemple une couleur rouge) tandis que dans l'exemple illustré sur la figure 2, l'indicateur 53 a une valeur inactive (par exemple l'absence de la couleur rouge). Comme on peut le voir plus précisément sur les figures 9 et 10, l'indicateur 53 a une valeur active visible sur la figure 10 et une valeur inactive visible sur la figure 9. Une pointe 55, solidaire de la poignée d'actionnement 32, est agencée pour appuyer sur un levier 56 permettant de donner à l'indicateur 53 une valeur inactive, avec la pièce mobile 100 déplacée de manière à rendre invisible l'élément indicateur 101, lorsque les bretelles sont dans l'état escamoté. Les premiers passages 50 de sangle sont destinés à être inutilisés dans l'utilisation en groupe 2/3 du siège. Au contraire, lorsque les poignées d'actionnement 32 font passer les bretelles 6 de l'état escamoté dans l'état accessible, il n'y a plus de contact entre la pointe 55 et le levier 56, de telle sorte que la pièce mobile 100 de l'indicateur 53 est relâchée et revient, à l'aide de moyens de rappel tels qu'un ressort (non visible), dans la position où l'indicateur présente une valeur active, à savoir l'apparence de l'élément indicateur 101 formant une languette rouge le long du premier passage de sangle. Ceci indique à l'utilisateur l'endroit du passage 50 de la ceinture de sécurité, lorsque le siège est utilisé en groupe 1.

Le déplacement des poignées d'actionnement 32 commande également dans l'exemple illustré le changement de valeur du second indicateur 54. Lorsque les bretelles 6 sont dans l'état escamoté, le second indicateur 54 prend une valeur active, de manière à guider l'utilisateur vers les seconds passages 51, pour qu'il fasse passer la sangle pectorale de la ceinture de sécurité du véhicule par ces seconds passages. Au contraire, lorsque les bretelles 6 sont dans l'état accessible, l'indicateur 54 a une valeur inactive pour que l'utilisateur ne mette pas la sangle dans les seconds passages 51 mais dans les premiers passages 50 qui, eux, ont un premier indicateur 53 associé qui est dans une valeur active.

Dans l'exemple illustré, le siège auto comprend au moins un troisième indicateur 57 de passage de la sangle ventrale de la ceinture de sécurité du véhicule, visible notamment sur les figures 1 et 2, pouvant prendre deux valeurs, à savoir une valeur inactive ou active en fonction respectivement de l'utilisation du siège auto en groupe 1 ou en groupe 2/3. Dans l'exemple illustré, le troisième indicateur 57 peut prendre une valeur inactive ou active en fonction respectivement de la présence ou de l'absence de l'embase 20.

Dans l'exemple illustré sur la figure 1, le troisième indicateur 57 a une valeur inactive, par exemple de couleur grise. Dans l'exemple illustré sur la figure 2, le troisième indicateur 57 a une valeur active par exemple de couleur rouge.

Dans cet exemple, le changement de valeur du troisième indicateur est commandé par la solidarisation ou la désolidarisation de l'embase 20 relativement à l'assise 2. En retirant l'embase 20 de l'assise, on fait passer le troisième indicateur de la valeur inactive à la valeur active. En remettant l'embase 20 sur l'assise, on fait passer le troisième indicateur de la valeur active à la valeur inactive.

Il est à noter que l'embase 20 comporte un indicateur 60 supplémentaire de passage de sangle, toujours dans la valeur active, puisque, dans ce mode de réalisation, il est toujours utilisé lorsque l'embase 20 est solidarisée à l'assise 2. L'embase 20 comprend un passage de sangle 61 correspondant à l'indicateur 60, visible sur la figure 1, pour permettre le passage de la sangle ventrale de la ceinture de sécurité du véhicule, dans l'utilisation en groupe 1 du siège auto.

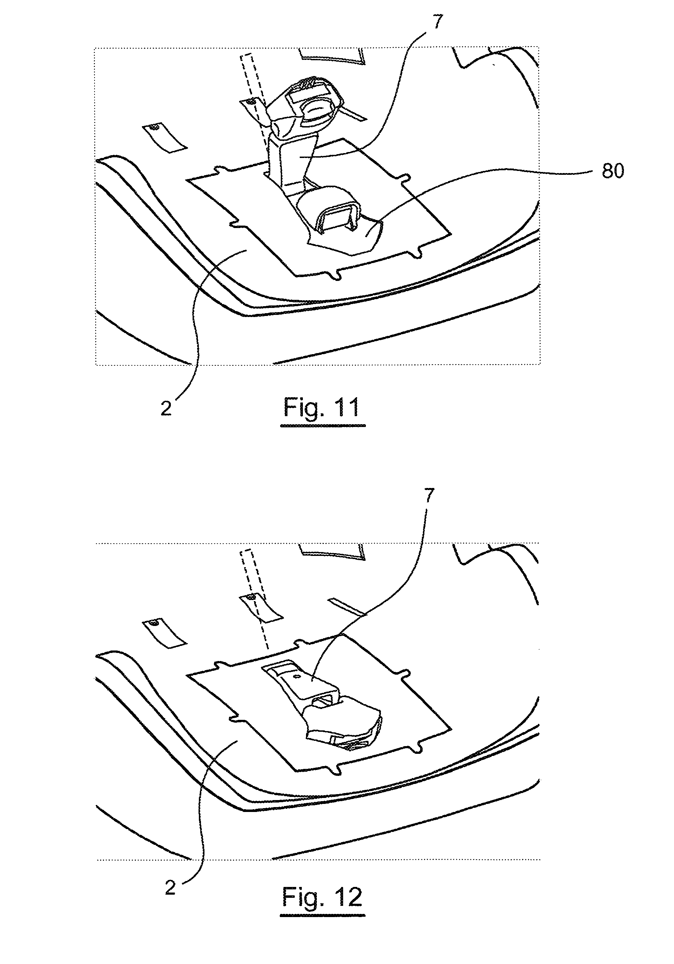

Dans ce mode de réalisation, la solidarisation de l'embase 20 à l'assise 2 provoque également l'accessibilité de la patte d'entrejambe 7 comme visible sur la figure 11, tandis que le retrait ou la désolidarisation de l'embase provoque l'escamotage de la patte d'entrejambe 7 dans un logement 80 réalisé dans l'assise. Cela permet d'effacer toute trace de présence du harnais lorsque le siège auto est utilisé en groupe 2/3, même si le harnais 5 est toujours présent sur le siège auto.

La garniture du siège auto masque la présence du harnais comme visible sur la figure 4 notamment.

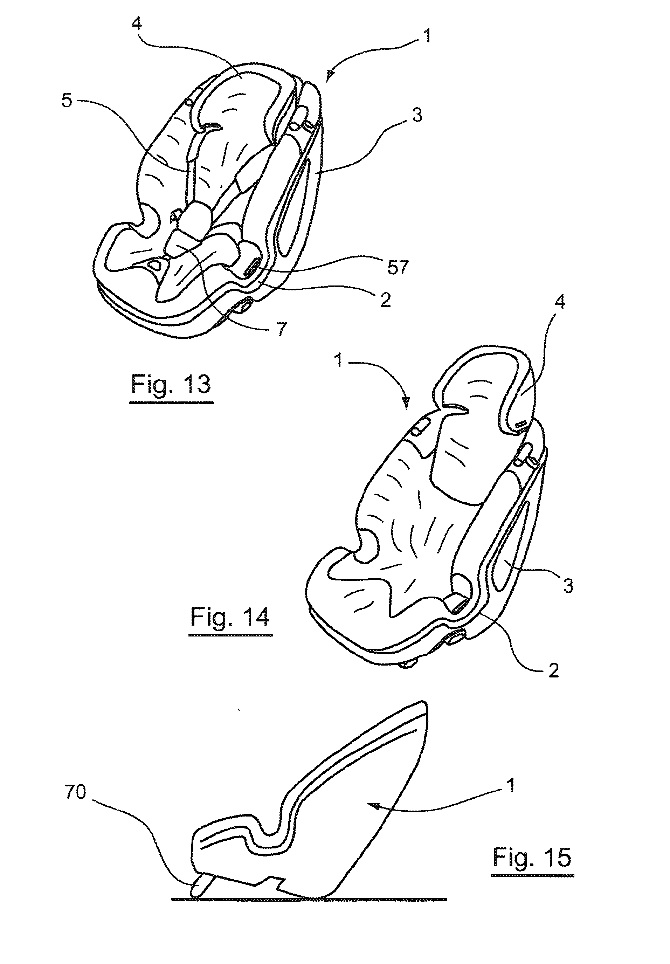

On a illustré sur les figures 13 à 15, un autre exemple de réalisation du siège auto conforme à l'invention, dans lequel le siège auto ne comporte pas d'embase ou présente une embase permanente, c'est-à-dire liée de manière permanente à l'assise. Le siège est inclinable à l'aide d'une béquille 70 visible sur le mode de réalisation de la figure 15. Dans ce cas, le troisième indicateur 57 change de valeur en fonction de l'escamotage du harnais qui agit sur cet indicateur par l'intermédiaire d'un câble, d'une biellette et/ou d'un ressort.

L'invention n'est bien sûr pas limitée aux exemples qui viennent d'être décrits.

Le contrôle du troisième indicateur 57 peut être assuré indépendamment de l'embase, par exemple à l'aide d'un câble ou de tringles entraînés par les poignées 32.

Par ailleurs, les indicateurs visuels peuvent être complétés ou remplacés par des moyens obturant ou fermant les passages de sangle, de façon à signifier encore plus clairement à l'utilisateur que ce passage ne doit pas être utilisé. Par exemple, l'embase peut agir sur une cale mobile venant occuper au moins partiellement le passage de sangle 57 lorsque l'embase est présente, et s'escamotant dans l'accoudoir du siège en l'absence d'embase, permettant alors le passage de la sangle.

De même, pour les autres passages de sangle, le changement de couleur peut être remplacé ou accompagné par le déplacement de volets ou de cales, qui obturent ou libèrent les passages en fonction de la position des poignées 32.

En particulier, les bretelles du harnais peuvent être escamotables ou non. Par exemple, elles peuvent nécessiter leur enlèvement pour passer de l'utilisation du siège auto en groupe 1 à l'utilisation du siège en groupe 2/3.

La têtière peut être mobile relativement au dossier comme dans les exemples illustrés, ou non.

Le contrôle de la valeur prise par les indicateurs de passage de sangle peut ne pas être assuré par un escamotage des bretelles du harnais par exemple, mais par tout autre moyen d'actionnement envisageable.

Dans toute la description, les expressions « comportant un » ou « comprenant un » doivent être comprises comme étant synonymes respectivement des expressions « comportant au moins un » et « comprenant au moins un », sauf si le contraire est spécifié.

Les plages de valeurs indiquées sont comprises comme incluant les bornes, sauf si le contraire est spécifié.

Les différents moyens décrits ci-dessus peuvent bien sûr être mis en oeuvre indépendamment des autres, ou selon diverses combinaisons.

## Revendications

1. Siège auto (1) pour enfant, destiné à être solidarisé au siège d'un véhicule automobile, du type dit groupe 1/2/3, comprenant une assise (2) et un dossier (3), ledit siège auto proposant deux chemins distincts de guidage d'une ceinture de sécurité dudit véhicule destinée à maintenir ledit siège et/ou ledit enfant, respectivement selon que ledit siège est utilisé dans une position dite groupe 1 ou dans une position dite groupe 2/3,
**caractérisé en ce qu'**il comprend des moyens de détermination de la position, groupe 1 ou groupe 2/3, dans laquelle se trouve ledit siège, et au moins un indicateur de passage (53 ; 54 ; 57) d'une sangle de ladite ceinture de sécurité du véhicule pouvant prendre deux états différents, un état actif et un état inactif, en fonction d'une information et/ou d'une action délivrée par lesdits moyens de détermination de la position.

2. Siège auto selon la revendication 1, **caractérisé en ce qu'**au moins un desdits indicateurs de passage comprend au moins une pièce mobile, obturant ou empêchant l'accès à un passage de sangle défini sur ledit siège auto, dans ledit état inactif, et autorisant l'accès audit passage de sangle dans ledit état actif.

3. Siège auto selon l'une des revendications précédentes, **caractérisé en ce qu'**au moins un desdits indicateurs de passage comprend au moins un élément indicateur lumineux et/ou présentant une première information visible dans ledit état actif.

4. Siège auto selon l'une quelconque des revendications précédentes, **caractérisé en ce que** lesdits moyens de détermination tiennent compte de la position d'une têtière mobile par rapport audit dossier.

5. Siège auto selon la revendication 4, **caractérisé en ce qu'**il comprend des moyens de contrôle et/ou d'actionnement d'au moins un desdits indicateurs de passage de sangle pilotés par ladite têtière.

6. Siège auto selon la revendication 5, **caractérisé en ce que** la têtière (4) est mobile par rapport au dossier (3) d'une part entre une position de hauteur minimale et une position intermédiaire et d'autre part entre la position intermédiaire et une position de hauteur maximale,
et **en ce que** lesdits moyens de contrôle et/ou d'actionnement sont configurés pour commander la valeur prise par au moins un des indicateurs de passage de sangle selon que la position de la têtière est comprise entre la position de hauteur minimale et la position intermédiaire ou entre la position intermédiaire et la position de hauteur maximale.

7. Siège auto selon l'une quelconque des revendications précédentes, comprenant :
- au moins un premier passage (50) de sangle solidaire du dossier (3) et destiné à recevoir la sangle pectorale (S) de la ceinture de sécurité, lorsque le siège auto (1) est utilisé en groupe 1,
- au moins un second passage (51) de sangle solidaire de la têtière (4) et destiné à recevoir la sangle pectorale (S) de la ceinture de sécurité, lorsque le siège auto (1) est utilisé en groupe 2/3,
- au moins un premier indicateur (53) associé à chacun des premiers passages (50) configuré pour prendre une valeur active lorsque le siège auto est utilisé en groupe 1 et une valeur inactive lorsque le siège auto est utilisé en groupe 2/3,
- au moins un second indicateur (54) associé à chacun des seconds passages (51) configuré pour prendre une valeur active lorsque le siège auto est utilisé en groupe 2/3, et une valeur inactive lorsque le siège auto est utilisé en groupe 1.

8. Siège auto selon l'une quelconque des revendications précédentes, **caractérisé en ce qu'**il comprend un harnais dont les bretelles (6) peuvent être escamotées dans des logements prévus à cet effet, lors du passage de l'utilisation en groupe 1 à l'utilisation en groupe 2/3, à l'aide de moyens d'actionnement comprenant une ou des poignées d'actionnement (32).

9. Siège auto selon l'une quelconque des revendications précédentes, dans lequel lorsque le siège auto est utilisé en groupe 1, il comprend une embase (20) sur laquelle peut être montée l'assise,
et en ce que lesdits moyens de détermination tiennent compte de la présence ou de l'absence de ladite embase.

10. Siège auto selon la revendication 9, **caractérisé en ce qu'**il comprend des moyens de contrôle et/ou d'actionnement du ou desdits indicateurs de passage de sangle en fonction de la présence ou de l'absence d'une embase sur laquelle l'assise peut être montée.

11. Siège auto selon la revendication 10, **caractérisé en ce que** ladite embase comprend au moins un élément contrôlant le passage dans l'état inactif d'un indicateur associé à un passage de sangle ventrale de ladite ceinture de sécurité.

12. Siège auto selon l'une quelconque des revendications précédentes, **caractérisé en ce qu'**il comprend des moyens d'escamotage de la patte d'entrejambe (7) agencés pour escamoter la patte d'entrejambe (7) lorsque le siège auto est utilisé en groupe 2/3 et pour faire apparaître la patte d'entrejambe (7) lorsque le siège auto est utilisé en groupe 1.

13. Siège auto selon la revendication 12, **caractérisé en ce que** lesdits moyens d'escamotage sont contrôlés par ladite embase.

## Patentansprüche

1. Kinderautositz (1) zum Verbinden mit einem Kraftfahrzeugsitz, wobei dieser Kinderautositz der sogenannten Gruppe 1/2/3 angehört und eine Sitzfläche (2) und eine Rücklehne (3) aufweist, wobei der besagte Kinderautositz zwei verschiedene Wege zum Führen eines Sicherheitsgurtes des besagten Fahrzeuges zum Zurückhalten des besagten Kindersitzes und/oder des besagten Kindes zulässt, je nachdem ob der besagte Sitz nach einer sogenannten Gruppe-1 Position oder nach einer sogenannten Gruppe 2/3 Position eingesetzt wird,
**dadurch gekennzeichnet, dass** er über Mittel zum Bestimmen der Position nach Gruppe 1 oder Gruppe 2/3 in der sich der Sitz befindet, verfügt, sowie über mindestens eine Anzeige für den Durchgang (53; 54; 57) eines Bandes des besagten Fahrzeugsicherheitsgurtes, das zwei verschiedene Zustände einnehmen kann, einen aktiven und einen inaktiven Zustand, als Funktion einer Information und/oder einer von den besagten Mitteln zum Feststellen der Position ausgeführten Aktion.

2. Kinderautositz nach Anspruch 1, **dadurch gekennzeichnet, dass** mindestens eine der besagten Durchgangsanzeigen mindestens ein bewegliches Teil aufweist, welches im besagten inaktiven Zustand den Zugang zu einem bestimmten Banddurchgang im besagten Kinderautositz versperrt oder verhindert, während es im besagten aktiven Zustand den besagten Banddurchgang zulässt.

3. Kinderautositz nach einem der vorhergehenden Ansprüche, **dadurch gekennzeichnet, dass** mindestens eine der besagten Banddurchgangsanzeigen mindestens ein Anzeigeelement aufweist, welches leuchtet und/oder eine erste visuelle Information im besagten aktiven Zustand liefert.

4. Kinderautositz nach einem der vorhergehenden Ansprüche, **dadurch gekennzeichnet, dass** die besagten Mittel zum Feststellen die Position einer im Verhältnis zur besagten Rücklehne beweglichen Kopfstütze mitberücksichtigen.

5. Kinderautositz nach Anspruch 4, **dadurch gekennzeichnet, dass** er über Mittel zum Steuern und/oder Aktivieren von mindestens einer der besagten Banddurchgangsanzeigen verfügt, die von der besagten Kopfstütze gesteuert werden.

6. Kinderautositz nach Anspruch 5, **dadurch gekennzeichnet, dass** die Kopfstütze (4) im Verhältnis zur Rücklehne (3) beweglich ist, einerseits zwischen einer niedrigsten Position und einer Zwischenposition und andererseits zwischen der Zwischenposition und einer höchsten Position und,
dass die besagten Mittel zum Steuern und/oder Aktivieren so konfiguriert sind, dass sie den Wert, den die Banddurchgangsanzeige einnimmt, je nachdem ob sich die Kopfstütze zwischen der niedrigsten Position und der Zwischenposition oder zwischen der Zwischenposition und der höchsten Position befindet, steuern.

7. Kinderautositz nach einem der vorhergehenden Ansprüche, der folgendes aufweist:
- mindestens einen ersten Banddurchgang (50), der mit der Rücklehne (3) verbunden ist und das Brustband (S) des Sicherheitsgurtes aufnehmen soll, wenn der Kinderautositz (1) als der Gruppe 1 zugehörig verwendet wird,
- mindestens einen zweiten Banddurchgang (51), der mit der Kopfstütze (4) verbunden ist und das Brustband (S) des Sicherheitsgurtes aufnehmen soll, wenn der Kinderautositz als der Gruppe 2/3 zugehörig verwendet wird,
- mindestens eine erste, mit jedem der ersten Banddurchgänge (50) zusammenhängende Anzeige (53), welche derart konfiguriert ist, dass sie einen aktiven Wert einnimmt, wenn der Kinderautositz als der Gruppe 1 zugehörig verwendet wird, und einen inaktiven Wert einnimmt, wenn der Kinderautositz als der Gruppe 2/3 zugehörig verwendet wird,
- mindestens eine zweite, mit jedem der zweiten Banddurchgänge (51) zusammenhängende Anzeige (54), welche derart konfiguriert ist, dass sie einen aktiven Wert einnimmt, wenn der Kinderautositz als der Gruppe 2/3 zugehörig verwendet wird, und einen inaktiven Wert einnimmt, wenn der Kinderautositz als der Gruppe 1 zugehörig verwendet wird.

8. Kinderautositz nach einem der vorhergehenden Ansprüche, **dadurch gekennzeichnet, dass** er ein Gurtsystem aufweist, dessen Schultergurte (6) in zu diesem Zweck vorhergesehenen Vertiefungen beim Übergang von der Verwendung als der Gruppe 1 zugehörig in die Verwendung als der Gruppe 2/3 zugehörig verborgen werden können, mit Hilfe von Aktivierungsmitteln, welche einen Aktivierungsgriff (32) oder mehrere Aktivierungsgriffe (32) aufweisen.

9. Kinderautositz nach einem der vorhergehenden Ansprüche, wobei, wenn der Autositz als der Gruppe 1 zugehörig verwendet wird, er einen Sockelteil (20) aufweist, auf dem die Sitzfläche angebracht werden kann und,
dass die Besagten Mittel zum Feststellen das Vorhandensein oder das Fehlen des besagten Sockelteils berücksichtigen.

10. Kinderautositz nach Anspruch 9, **dadurch gekennzeichnet, dass** er über Mittel zum Steuern und/oder Aktivieren der besagten Banddurchgangsanzeige bzw. der besagten Banddurchgangsanzeigen verfügt, als Funktion des Vorhandenseins oder des Fehlens eines Sockelteils, auf dem die Sitzfläche aufgebracht werden kann.

11. Kinderautositz nach Anspruch 10, **dadurch gekennzeichnet, dass** der besagte Sockelteil mindestens ein Element aufweist, welches den Übergang in den inaktiven Zustand einer Anzeige steuert, die mit dem Durchgang des Gürtelbandes des besagten Sicherheitsgurtes zusammenhängt.

12. Kinderautositz nach einem der vorhergehenden Ansprüche, **dadurch gekennzeichnet, dass** er über Mittel zum Verbergen des Zwischenbeinteils (7) verfügt, die so ausgelegt sind, dass das Zwischenbeinteil (7) dann verborgen wird, wenn der Kinderautositz als der Gruppe 2/3 zugehörig verwendet wird und, um das Zwischenbeinteil (7) hervortreten zu lassen, wenn der Kinderautositz als der Gruppe 1 zugehörig verwendet wird.

13. Kinderautositz nach Anspruch 12, **dadurch gekennzeichnet, dass** die besagten Mittel zum Verbergen durch den besagten Sockelteil gesteuert werden.

## Claims

1. Child's car seat (1), intended to be fastened to a vehicle seat, of the so-called group 1/2/3 type, comprising a seat member (2) and a backrest (3), said car seat proposing two separate guide paths for a safety belt of said vehicle intended to maintain said seat and/or said child, respectively according to whether said seat is used in a so-called group 1 position or in a so-called group 2/3 position,
**characterised in that** it comprises means for determining the position, group 1 or group 2/3, wherein said seat is located, and at least one passage indicator (53; 54; 57) of a strap of said safety belt of the vehicle able to have two different states, an active state and an inactive state, according to information and/or an action delivered by said means for determining the position.

2. Car seat according to claim 1, **characterised in that** at least one of said passage indicators comprises at least one mobile part, blocking or preventing access to a strap passage defined on said car seat in said inactive state, and authorising access to said strap passage in said active state.

3. Car seat according to one of the preceding claims, **characterised in that** at least one of said passage indicators comprises at least one lighted indicator element and/or having a first information able to be seen in said active state.

4. Car seat according to one of the preceding claims, **characterised in that** said means for determining take the position of a mobile headrest in relation to said backrest into account.

5. Car seat according to claim 4, **characterised in that** it comprises means for controlling and/or actuating at least one of said strap passage indicators controlled by said headrest.

6. Car seat according to claim 5, **characterised in that** the headrest (4) is mobile in relation to the backrest (3) on the one hand between a position of minimum height and an intermediate position and on the other hand between the intermediate position and a position of maximum height,
and **in that** said means for controlling and/or actuating are configured to control the value taken by at least one of the strap passage indicators according to whether the position of the headrest is between the position of minimum height and the intermediate position or between the intermediate position and the position of maximum height.

7. Car seat according to one of the preceding claims, comprising:
- at least one first strap passage (50) integral with the backrest (3) and intended to receive the chest strap (S) of the safety belt, when the car seat (1) is used in group 1,
- at least one second strap passage (51) integral with the headrest (4) and intended to receive the chest strap (S) of the safety belt, when the car seat (1) is used in group 2/3,
- at least one first indicator (53) associated to each of the first passages (50) configured to have an active value when the car seat is used in group 1 and an inactive value when the car seat is used in group 2/3,
- at least one second indicator (54) associated with each of the second passages (51) configured to have an active value when the car seat is used in group 2/3, and an inactive value when the car seat is used in group 1.

8. Car seat according to any of the preceding claims, **characterised in that** it comprises a harness of which the shoulder straps (6) can be retracted into housings provided for this purpose, during the switching from the use in group 1 to the use in group 2/3, using means for actuating comprising one or more actuating handles (32).

9. Car seat according to any of the preceding claims, wherein when the car seat is used in group 1, it comprises a base (20) whereon the seat member can be mounted,
and in that said means for determining takes the presence or the absence of said base into account.

10. Car seat according to claim 9, **characterised in that** it comprises means for controlling and/or actuating said strap passage indicator or indicators according to the presence or the absence of a base whereon the seat member can be mounted.

11. Car seat according to claim 10, **characterised in that** said base comprises at least one element controlling the passage in the inactive state of an indicator associated with a passage of the ventral strap of said safety belt.

12. Car seat according to any of the preceding claims, **characterised in that** it comprises means for retracting the crotch piece (7) arranged to retract the crotch piece (7) when the car seat is used in group 2/3 and to cause the crotch piece (7) to appear when the car seat is used in group 1.

13. Car seat according to claim 9, **characterised in that** said means for retracting are controlled by said base.
